# EUROPEAN PATENT APPLICATION

(11) **EP 4 528 332 A1**
(43) Date of publication of application: **26.03.2025**
(21) Application number: 23839586.7
(22) Date of filing: 07.07.2023
(51) Int. Cl.: G01S 17/931, G01S 17/89

(54) **DATA PROCESSING ALGORITHM EVALUATION DEVICE**

(30) Priority: 14.07.2022 JP 2022113347
(71) Applicant: Mitsubishi Heavy Industries Machinery Systems, Ltd., Kobe-shi, Hyogo 652-8585 (JP); The University of Tokyo, Bunkyo-ku, Tokyo 113-8654 (JP)
(72) Inventor: SHIMIZU, Hirokazu, Kobe-shi, Hyogo 652-8585 (JP); NISHIMORI, Toshiaki, Kobe-shi, Hyogo 652-8585 (JP); NAKAO, Kenta, Tokyo 100-8332 (JP); KAMIJO, Shunsuke, Tokyo 113-8654 (JP); LEE, Jinho, Tokyo 113-8654 (JP)
(74) Representative: Hoffmann Eitle
(86) International application number: PCT/JP2023/025294
(87) International publication number: WO 2024/014414

(57) **Abstract**

A data processing algorithm evaluation device includes: a data storage unit configured to store therein a plurality of pieces of optical ranging data detected from a vehicle; a data generating unit configured to acquire and interpret target data, upon receiving an input of disturbance information representing disturbance for the target data, from the plurality of pieces of optical ranging data stored in the data storage unit, and to generate composite data in which the target data is reflected with the disturbance, by editing the target data on the basis of the interpretation; and a data processing unit configured to evaluate performance of a data processing algorithm for determining situation of the vehicle, on the basis of the generated composite data.

## Description

### Field

The present disclosure relates to a data processing algorithm evaluation device.

### Background

Vehicles with driving-assistance functions, such as autonomous driving, are currently under development. A vehicle with such a driving-assistance function is provided with an image processing algorithm configured to cause an onboard camera or the like to capture images of the environment around the vehicle and to determine the situation of the vehicle, on the basis of the captured images thus captured.

Such image processing algorithms are subjected to various types of performance evaluations, in order to ensure appropriate driving-assistance functions. There is a known technology for evaluating the performance of an image processing algorithm, by superimposing a weather disturbance image created with computer graphics, over an actual image captured from the vehicle to create composite image, and causing the image processing algorithm to apply image processing to the composite image (see Patent Literature 1, for example).

### Citation List

### Patent Literature

Patent Literature 1: Japanese Patent Application Laid-open No. 2010-033321

### Summary

### Technical Problem

However, images created by the technology disclosed in Patent Literature 1, such as an image of a weather disturbance, do not reflect surroundings, such as objects, included in the actual image. For this reason, evaluations carried out using such a composite image may not be appropriate evaluations of the image processing algorithm. Furthermore, there have also been some disclosures related to technologies for determining the settings around a vehicle on the basis of information other than images as described above. Under such circumstances, there is a demand for appropriate performance evaluations for information processing algorithms.

The present disclosure is made in consideration of the above, and an object of the present disclosure is to provide a data processing algorithm evaluation device capable of making appropriate performance evaluations of a data processing algorithm for determining the situation of the vehicle.

### Solution to Problem

A data processing algorithm evaluation device according to the present disclosure includes: a data storage unit configured to store optical ranging data detected from a vehicle; a data generating unit configured to acquire and interpret target data, upon receiving an input of disturbance information representing disturbance for the target data, from the optical ranging data stored in the data storage unit, and to generate composite data in which the target data is reflected with the disturbance by editing the target data based on the interpretation; and a data processing unit configured to evaluate performance of a data processing algorithm for determining situation of the vehicle, based on the generated composite data.

### Advantageous Effects of Invention

According to the present disclosure, it is possible to make appropriate performance evaluations of a data processing algorithm for determining the situation of the vehicle.

### Brief Description of Drawings

FIG. 1 is a functional block diagram illustrating one example of a data processing algorithm evaluation device according to a first embodiment.
FIG. 2 is a schematic illustrating one example of optical ranging data.
FIG. 3 is a schematic illustrating one example of a process performed by a data generating unit.
FIG. 4 is a flowchart illustrating the sequence of data generation processing.
FIG. 5 is a functional block diagram illustrating one example of a data processing algorithm evaluation device according to a second embodiment.
FIG. 6 is a conceptual schematic illustrating one example of a data learning unit.
FIG. 7 is a conceptual schematic illustrating another example of the data learning unit.
FIG. 8 is a diagram schematically illustrating one example of convolution processing.
FIG. 9 is a diagram schematically illustrating one example of skip connection processing.
FIG. 10 is a flowchart illustrating the sequence of data generation processing.
FIG. 11 is a conceptual schematic illustrating one example of a data learning unit according to a third embodiment.
FIG. 12 is a flowchart illustrating the sequence of data generation processing.

### Description of Embodiments

Some embodiments of a data processing algorithm evaluation device according to the present disclosure will now be explained with reference to drawings. These embodiments are, however, not intended to limit the scope of the present invention in any way. Note that elements disclosed in the embodiments also include those that can be replaced or are easily replaceable by those skilled in the art, and those that are substantially identical.

### [First Embodiment]

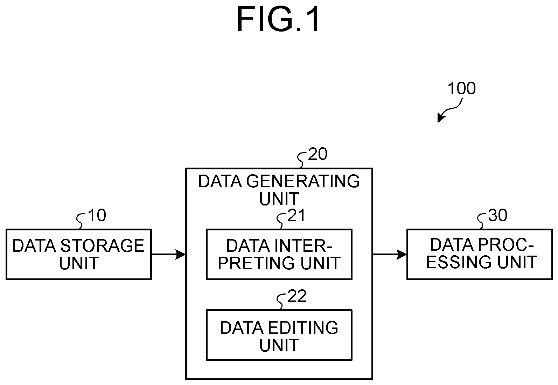

FIG. 1 is a functional block diagram illustrating one example of a data processing algorithm evaluation device according to a first embodiment. A data processing algorithm evaluation device 100 illustrated in FIG. 1 has a computing unit that is a central processing unit (CPU), and a storage device that is a memory storing therein information such as results of operations and computer programs. The memory includes at least one of a random access memory (RAM) and an external storage device such as a read-only memory (ROM) and a hard disk drive (HDD). As illustrated in FIG. 1, the data processing algorithm evaluation device 100 includes a data storage unit 10, a data generating unit 20, and a data processing unit 30.

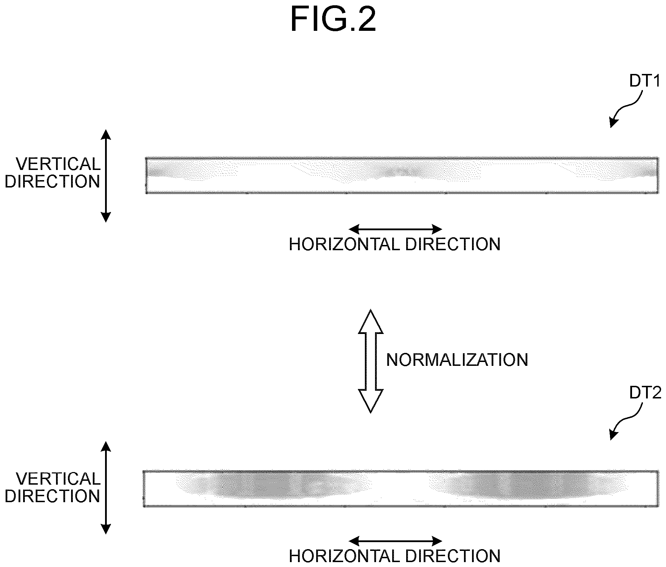

The data storage unit 10 stores therein optical ranging data detected from a vehicle. The optical ranging data is measurement data obtained using an optical ranging technique such as laser imaging detection and ranging (LiDAR). One example of the optical ranging data is data obtained by outputting a beam of measurement light from a vehicle, and receiving reflection light of the measurement light. FIG. 2 is a schematic illustrating one example of optical ranging data. As illustrated in FIG. 2, the optical ranging data includes distance data DT1 indicating the distance to an object, and intensity data DT2 indicating the intensity of the measurement light reflected from the object. The optical ranging data is obtained for each beam of measurement light emitted from the vehicle, and is a two-dimensional data arranged in the vertical direction and the horizontal direction, correspondingly to the directions along which the beams are emitted.

The distance data DT1 and the intensity data DT2 are generated as normalized, for example. In this embodiment, normalization includes representing each distance value in the distance data DT1 on a scale of M values, and representing each intensity value in the intensity data DT2 on a scale of N values, where M and N are the same or substantially the same values. For example, if the distance data DT1 represents a distance as a value within a range of 0 to 250, and the intensity data DT2 represents an intensity as a value within a range of 0 to 60000, the ranges of values that these pieces of data can take are very different. Therefore, by adjusting the ranges of values these pieces of data can take to ranges that are the same or substantially the same (by applying normalization to the data), the weights of these pieces of data can be equalized or substantially equalized. The distance data DT1 and the intensity data DT2 can be normalized by dividing each value by a predetermined value α, for example. In such a case, α may be set as a quotient of dividing the maximum value in the intensity data DT2 by the maximum value in the distance data DT1, for example. It is also possible to, after dividing each value in the distance data DT1 and the intensity data DT2 by the predetermined value α, take a root of at least one of the resultant values of the distance data DT1 and intensity data DT2. When normalization is performed, it may be in an aspect in which at least one of the distance data DT1 and the intensity data DT2 is adjusted, without limitation to the aspect in which the distance data DT1 and the intensity data DT2 are both adjusted.

The data generating unit 20 generates composite data that is a data resultant of compositing a disturbance that is based on disturbance information input from an input unit or the like, not illustrated, with the target data input from the data storage unit 10. The data generating unit 20 includes a data interpreting unit 21 and a data editing unit 22. The data interpreting unit 21 interprets the data stored in the data storage unit 10. The data editing unit 22 edits the target data input to the data generating unit 20.

The data processing unit 30 performs data processing, on the basis of the generated composite data, to evaluate the performance of a data processing algorithm for determining the situation of the vehicle. The data processing unit 30 causes the data processing algorithm to process the composite data, to calculate determination information by which the situation of the vehicle is determined. The data processing unit 30 then stores the calculated determination information in a storage unit or the like not illustrated. One example of the determination information includes time to crossing that is the time for a running vehicle to reach the position of an object ahead of the vehicle from a detection position. The data processing unit 30 can evaluate the performance of the data processing algorithm on the basis of whether the determination information exhibits a large difference when a disturbance is introduced to the data to be processed by the data processing algorithm, with respect to that when no disturbance is included.

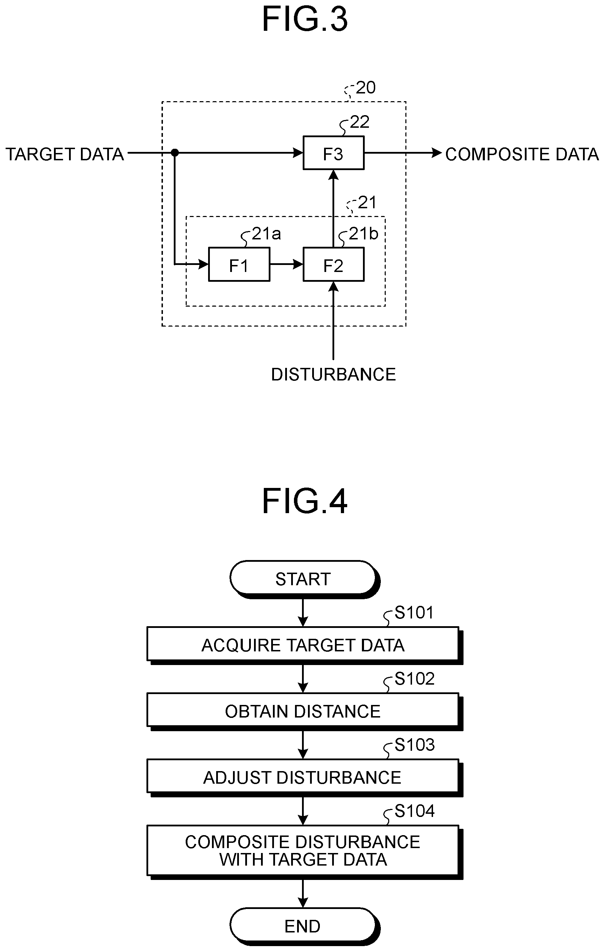

FIG. 3 is a schematic illustrating one example of a process performed by the data generating unit 20. As illustrated in FIG. 3, the data generating unit 20 receives inputs of target data and disturbance information. An example of the target data is optical ranging data resultant of detecting ahead of the vehicle. An example of the disturbance information includes information of a weather condition such as fog. In the description of this embodiment, fog will be used as an example of the disturbance.

The data interpreting unit 21 includes computing units 21a, 21b. **In** this embodiment, the data interpreting unit 21 interprets the distance to an object. The computing unit 21a acquires the input target data. The computing unit 21a performs data processing to calculate the distance of an object included in the target data, with respect to the position where the target data is detected, for each beam. When the object included in the target data is the sky, the computing unit 21a may calculate the distance as infinity (indicating the sky). The computing unit 21a generates distance information by mapping the calculated distance to the beam corresponding thereto, and outputs the distance information.

The computing unit 21b receives the distance information output from the computing unit 21a. The computing unit 21b also acquires disturbance information input via the input unit, not illustrated. One example of the disturbance information includes fog data generated using computer graphics. This data may be data having the same resolution as the target data (optical ranging data), for example.

The computing unit 21b calculates how strong the disturbance is, on the basis of the distance information corresponding to each beam. For example, in a foggy environment, objects farther away from the detection position are affected more by the fog. Therefore, by adjusting the strength of the disturbance correspondingly to each beam, on the basis of the distance included in the distance information, the computing unit 21b can adjust the disturbance so that the disturbance become closer to that in the actual environment. After adjusting the disturbance for each beam, the computing unit 21b outputs the disturbance information including the adjusted disturbance.

The data editing unit 22 acquires the input target data. The data editing unit 22 acquires the disturbance information output from the computing unit 21b. The data editing unit 22 generates composite data by superimposing, for each beam, the disturbance included in the acquired disturbance information over the target data. In other words, the disturbance information input to the data editing unit 22 is the information having the disturbance strength adjusted for each beam, on the basis of the distance, as compared with the disturbance information input from the input unit, not illustrated. By superimposing such adjusted disturbance over the target data, it is possible to generate more appropriate composite data, which is closer to the actual disturbance environment.

The data processing unit 30 evaluates the performance of a data processing algorithm for determining the situation of the vehicle, on the basis of the composite data. Because the performance of the data processing algorithm is evaluated on the basis of appropriate composite data that is closer to the actual surrounding environment, more appropriate evaluation results can be obtained, compared with when a disturbance generated simply by using computer graphics is superimposed over the target data. Furthermore, compared with when the situation of the vehicle are determined using a simulator configured to reproduce the actual surrounding environment three-dimensionally in detail, appropriate evaluation results can be obtained without using a large-scale system.

FIG. 4 is a flowchart illustrating the sequence of data generation processing. As illustrated in FIG. 4, the data generating unit 20 causes the data interpreting unit 21 to acquire input target data (Step S101). The data interpreting unit 21 obtains the distance of an object included in the target data corresponding to a beam, with respect to the detection position, from the target data (Step S102), and adjusts the disturbance by calculating the strength of disturbance on the basis of the acquired distance (Step S103). The data editing unit 22 then generates composite data by compositing the target data with disturbance having been attenuated, on the basis of the input target data and the disturbance calculated by the computing unit 21b (Step S104).

As described above, the data processing algorithm evaluation device 100 according to this embodiment includes: the data storage unit 10 configured to store therein a plurality of pieces of optical ranging data detected from a vehicle; the data generating unit 20 configured to acquire and interpret target data the target data, upon receiving an input of disturbance information representing disturbance for the target data, from the plurality of pieces of optical ranging data stored in the data storage unit 10, and to generate composite data in which the target data is reflected with the disturbance, by editing the target data on the basis of the interpretation; and the data processing unit 30 configured to evaluate performance of a data processing algorithm for determining the situation of the vehicle, on the basis of the generated composite data.

With this configuration, because the data generating unit 20 generates composite data by editing the target data in such a manner that the disturbance is reflected to the target data, on the basis of the result of an interpretation of the target data, it is possible to generate composite data closer to the actual surrounding environment, compared with a configuration in which disturbance having been generated merely with computer graphics is superimposed over the target data, for example. **In** this manner, it is possible to make appropriate performance evaluations of a data processing algorithm for determining the situation of the vehicle.

Furthermore, in the data processing algorithm evaluation device 100 according to this embodiment, the data generating unit 20 is configured to acquire the distance of an object included in the target data, with respect to the detection position, to calculate a strength of disturbance affected by the distance, on the basis of the acquired distance, and to generate the composite data on the basis of the calculate result. Therefore, it is possible to generate composite data closer to the actual surrounding environment.

Furthermore, in the data processing algorithm evaluation device 100 according to this embodiment, the optical ranging data is acquired for each beam of measurement light emitted from the vehicle, and is a two-dimensional data arranged in the vertical direction and the horizontal direction correspondingly to the directions in which the beams are emitted. Therefore, the optical ranging data can be handled in the same manner as image data.

Furthermore, in the data processing algorithm evaluation device 100 according to this embodiment, the optical ranging data includes distance data indicating the distance to an object, and intensity data indicating the intensity of the measurement light reflected from the object. Therefore, a single piece of optical ranging data includes two types of data, that is, the distance data and the intensity data, so that it is possible to determine the situation of the vehicle more appropriately.

### [Second Embodiment]

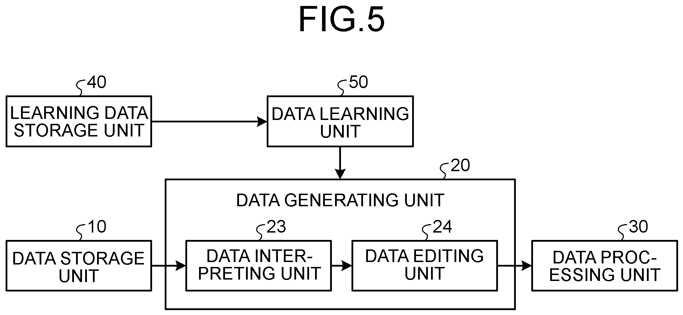

A second embodiment will now be explained. FIG. 5 is a functional block diagram illustrating one example of a data processing algorithm evaluation device according to the second embodiment. The data processing algorithm evaluation device 100 according to the second embodiment has a configuration including the data storage unit 10, the data generating unit 20, and the data processing unit 30, in the same manner as in the first embodiment. In this embodiment, however, the data generating unit 20 performs a process different from that according to the first embodiment. Furthermore, a learning data storage unit 40 and a data learning unit 50 are further provided. In this embodiment, the optical ranging data includes distance data and intensity data, and at least one of the distance values and the intensity values are normalized so that the distance values and the intensity values are in a corresponding relation, in the same manner as in the first embodiment.

In this embodiment, the learning data storage unit 40 stores therein reference data that is optical ranging data not including disturbance, and disturbance data that is optical ranging data including disturbance, as learning data. An example of the reference data is optical ranging data detected under a condition with the least amount of disturbance, e.g., during the daytime on a sunny day. An example of the disturbance data is optical ranging data detected in a condition in which there is a larger amount of disturbance that in the reference data, e.g., during the rain, snow, fog, dawn, in the evening, or at night. The learning data storage unit 40 may store therein the reference data in a manner mapped to the disturbance data, for the same or corresponding targets of detection. For example, the learning data storage unit 40 may store therein reference data detected at a predetermined location during the daytime on a sunny day, in a manner mapped with pieces of disturbance data detected at the predetermined location during the rain, snow, fog, dawn, evening, and at night, respectively.

In this embodiment, the data learning unit 50 is capable of generating learning composite data through learning using a neural network, for example, by receiving inputs of target data and disturbance information representing the disturbance for the target data. For example, as a method for causing the data learning unit 50 to implement predetermined data editing using a neural network, a technology referred to as a generative adversarial network (GAN) or a cycle generative adversarial network (Cycle GAN) may be used.

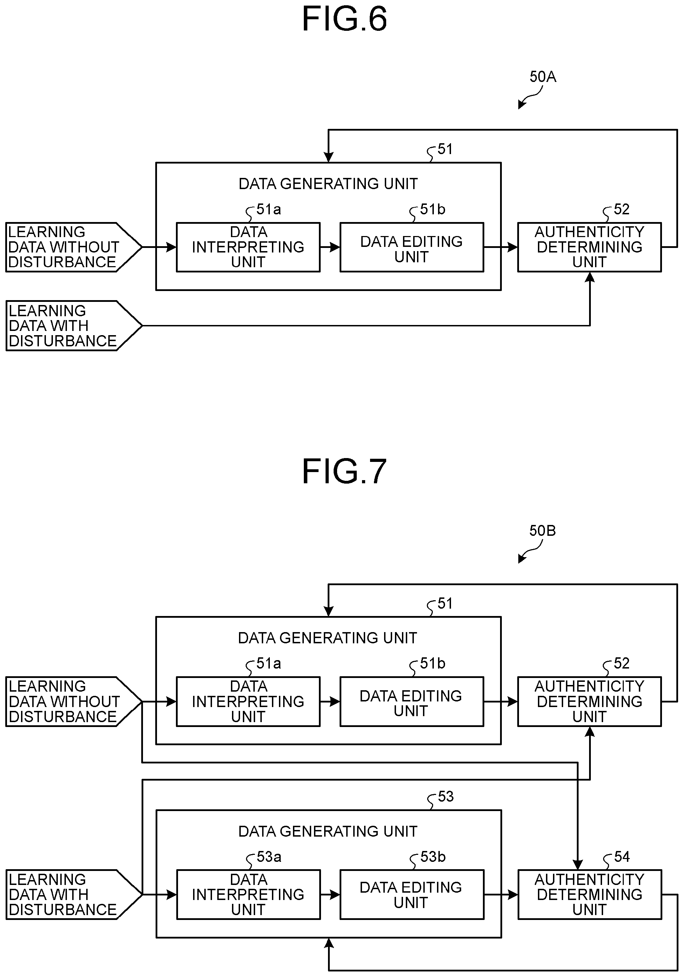

FIG. 6 is a conceptual schematic illustrating one example of the data learning unit 50 (data learning unit 50A). The generative adversarial network used in the data learning unit 50A includes two neural networks that are a data generating unit 51 and an authenticity determining unit 52, as illustrated in FIG. 6. The data generating unit 51 has a configuration similar to that of the data generating unit 20, and includes a data interpreting unit 51a and a data editing unit 51b. The data interpreting unit 51a in this embodiment interprets features of target data using a neural network. The data generating unit 51 generates learning composite data by compositing reference data with disturbance, following the same process as that by which the data generating unit 20 generates composite data on the basis of the target data and the disturbance information. The authenticity determining unit 52 determines the authenticity of the learning composite data generated by the data generating unit 51, on the basis of the learning composite data generated by the data generating unit 51 and disturbance data mapped to the reference data. The data generating unit 51 generates the learning composite data in such a manner that the learning data is determined to be closer to the authentic data by the authenticity determining unit 52. The authenticity determining unit 52 is configured to attempt to detect more differences in the generated learning composite data, with respect to the authentic data. By causing such two networks to compete with each other alternately and to perform learning through the competition, the data generating unit 51 becomes able to generate learning composite data closer to the authentic disturbance data.

FIG. 7 is a conceptual schematic illustrating another example of the data learning unit 50 (data learning unit 50B). As illustrated in FIG. 7, a cycle generative adversarial network used in the data learning unit 50B includes data generating units 51, 53, and authenticity determining units 52, 54. The data generating units 51, 53 have the same configuration as that of the data generating unit 20. The data generating unit 51 includes the data interpreting unit 51a and the data editing unit 51b. The data generating unit 53 includes data interpreting units 53a and 53b. The data generating unit 51 generates first learning composite data by compositing the reference data with disturbance. The data generating unit 53 generates second learning composite data by removing the disturbance from the disturbance data. The authenticity determining unit 52 determines the authenticity of the first learning composite data, on the basis of the authentic disturbance data. The authenticity determining unit 54 determines the authenticity of the second learning composite data, on the basis of the reference data. The data generating units 51, 53 generate first and the second learning composite data in such a manner that the data is determined to be closer to the authentic data by the authenticity determining units 52, 54, respectively, that is, so as to achieve a higher accuracy. The authenticity determining units 52, 54, by contrast, attempt to detect more differences in the generated first learning composite data and second learning composite data with respect to the authentic data. By causing such two networks to compete each other and to perform learning through the competition, the data generating unit 51 becomes able to generate learning composite data closer to the authentic disturbance data, that is, learning composite data determined to be more accurate.

**In** a cycle generative adversarial network, the learning data may be any data as long as the reference data does not include disturbance and the disturbance data includes disturbance, without the need for the reference data and the disturbance being mapped to each other. Therefore, collection of the learning data can be simplified, as compared with that used in generative adversarial networks. Furthermore, when a cycle generative adversarial network is used, a plurality of pieces of disturbance data each having a different degree of disturbance can be stored in the learning data storage unit 40.

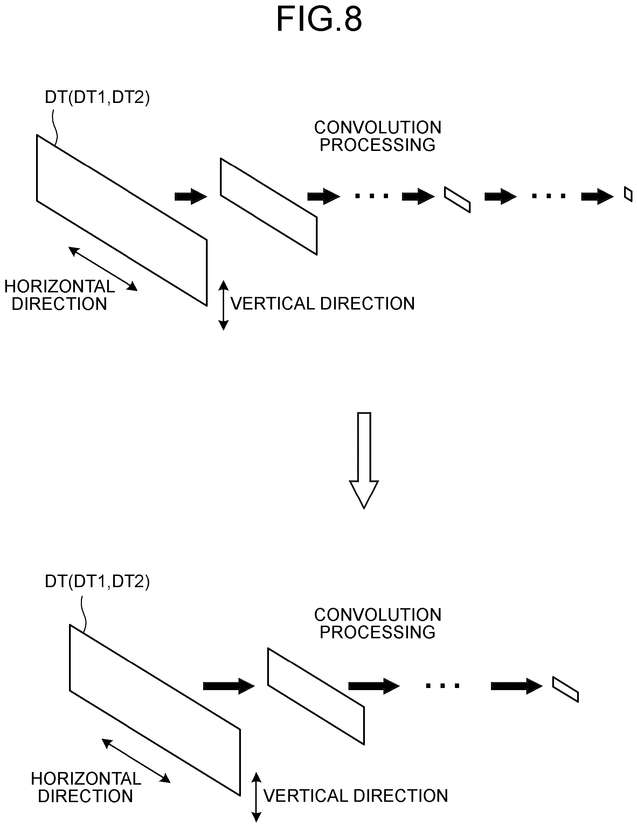

FIG. 8 is a diagram schematically illustrating one example of convolution processing. The data learning unit 50 using the generative adversarial network or the cycle generative adversarial network described above performs convolution processing on the optical ranging data.

The optical ranging data DT (the distance data DT1, the intensity data DT2) contains a larger amount of data corresponding to beams in the horizontal direction, than in the vertical direction. There is also a large difference in the numbers of beams in the horizontal direction and those in the beams in the vertical direction. For example, 64 beams in the vertical direction and 1024 beams in the horizontal direction may correspond to a single piece of optical ranging data DT. Hereinafter, the number of beams in the vertical direction and the number of the beams in the horizontal direction corresponding to a single piece of optical ranging data DT are denoted as "64×1024", for example.

Usually, when convolution processing is to be applied to such 64×1024 optical ranging data DT, the convolution processing is run ten times, as 32×512, 16×256, 8×128, 4×64, 2×32, 1×16, 1×8, 1×4, 1×2, and 1×1, and a lack of an amount of information in the vertical direction occurs. Therefore, in the convolution processing, the data learning unit 50 uses the number of beams in the vertical direction in the optical ranging data DT, as the reference.

In the example described above, the convolution processing, which is usually performed ten times on the 64×1024 optical ranging data DT, is run only six times, that is, 32×512, 16×256, 8×128, 4×64, 2×32, and 1×16. In other words, the convolution processing is ended at the stage where the number of beams in the vertical direction arrives at one. In this manner, it is possible to suppress the lack of the amount of information in the vertical direction. At this time, when a model using a residual block, such as Residual Network (Resnet) is used, stable learning results can be achieved by adjusting the number of loops in the residual block.

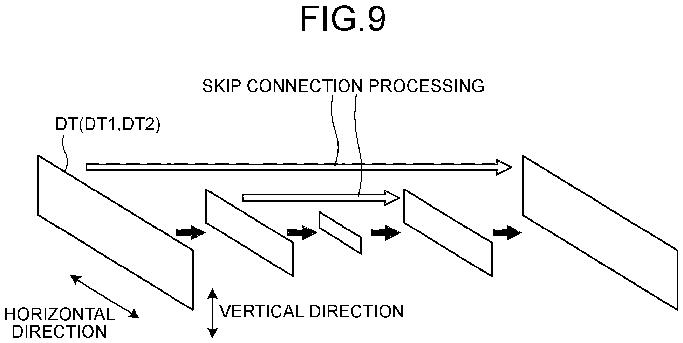

FIG. 9 is a diagram schematically illustrating one example of skip connection processing. When the generative adversarial network or the cycle generative adversarial network is used, the data learning unit 50 may be configured to perform skip connection processing to the optical ranging data DT (the distance data DT1, the intensity data DT2). The skip connection processing is a technique for maintaining features of the details by connecting data prior a compression in each layer of the convolution processing, to each layer in the decompression. By performing skip connection processing, the features of the details lost in the convolution processing can be maintained. Therefore, it becomes possible to reproduce the details of the optical ranging data DT.

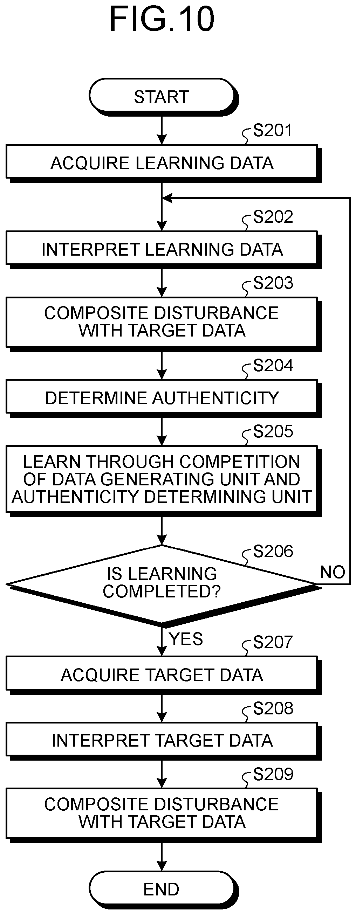

FIG. 10 is a flowchart illustrating the sequence of data generation processing. As illustrated in FIG. 10, the data learning unit 50 acquires the learning data stored in the learning data storage unit 40 (Step S201). The data generating unit 51 causes the data interpreting unit 51a to interpret the acquired learning data (Step S202). The data editing unit 51b generates learning composite data that is the learning data with the disturbance added thereto, on the basis of the interpretation result (Step S203). The authenticity determining unit 52 determines the authenticity of the learning composite data, on the basis of the authentic disturbance data (Step S204). The data learning unit 50 performs learning through competition by causing the data generating unit 51 and the authenticity determining unit 52 to compete with each other alternately (Step S205). The data learning unit 50 then determines whether the learning has been completed (Step S206). If it is determined that the learning has completed (Yes at Step S206), the process is shifted to Step S207. If it is determined that the learning has not been completed yet (No at Step S206), the process at Step S202 and thereafter are repeated. At Step S206, the data learning unit 50 can determine that the learning has completed when the difference between the learning composite data and the authentic disturbance data becomes equal to or less than a predetermined amount, for example, that is, when the accuracy equal to or higher than a predetermined value is achieved.

When the target data and the disturbance information are input after the completion of the learning, the data generating unit 20 acquires the target data from the data storage unit 10 (Step S207). The data interpreting unit 21 interprets the data based on the result of the learning (Step S208). The data editing unit 22 then generates composite data that is the target data with the disturbance added thereto, on the basis of the interpretation result (Step S209).

As described above, in the data processing algorithm evaluation device 100 according to this embodiment, the learning data storage unit 40 is configured to store therein reference data that is the optical ranging data not including disturbance, and disturbance data that is optical ranging data including disturbance; the data learning unit 50 is configured to perform learning using a generative adversarial network or a cycle generative adversarial network on the basis of the reference data and the disturbance data; and the data generating unit 20 is configured to interpret the target data and to generate composite data on the basis of the learning result of the data learning unit 50.

With this configuration, because the data learning unit 50 performs learning with optical ranging data using a generative adversarial network or a cycle generative adversarial network, and the data generating unit 20 interprets the target data and generates composite data on the basis of the result of the learning, it is possible to generate composite data closer to the actual surrounding environment. **In** this manner, it is possible to make appropriate performance evaluations of a data processing algorithm for determining the situation of the vehicle.

Furthermore, the learning data storage unit 40 is configured to store therein a plurality of pieces of disturbance data including the same type of disturbance by different degrees; the data learning unit 50 is configured to perform learning on the basis of the plurality of pieces of disturbance data including the disturbance by different degrees; the data generating unit 20 is configured to interpret the target data, upon receiving the disturbance information including the degrees of disturbance, on the basis of the learning result of the data learning unit 50, and to generate composite data in a manner reflecting the disturbance to the target data by the degree corresponding to the disturbance information. In this manner, pieces of composite data with different degrees of disturbance can be generated appropriately, so that a broad range of performance evaluations of the data processing algorithm becomes possible.

Furthermore, when a generative adversarial network or a cycle generative adversarial network is used, the learning data storage unit 40 is configured to uses the number of beams in the vertical direction in the optical ranging data as a reference in the convolution processing. Therefore, a lack in the amount of information in the vertical direction can be suppressed.

Furthermore, when a generative adversarial network or a cycle generative adversarial network is used, the learning data storage unit 40 is configured to perform the skip connection processing. **In** this manner, the features of details lost in the convolution processing can be maintained. Therefore, it becomes possible to reproduce the details of the optical ranging data DT.

Furthermore, the optical ranging data DT includes distance data DT1 indicating the distance to an object, and the intensity data DT2 indicating the intensity of the measurement light reflected from the object; and at least one of the distance values and the intensity values is normalized so that the distance values and the intensity values are in a corresponding relation. In this manner, because the weights of the distance data and the intensity data can be equalized or substantially equalized, a stable learning result can be obtained from the data learning unit 50.

### [Third Embodiment]

A third embodiment will now be explained. The data processing algorithm evaluation device 100 according to the third embodiment has a configuration including the data storage unit 10, the data generating unit 20, the data processing unit 30, the learning data storage unit 40, and the data learning unit 50, in the same manner as in the second embodiment. In this embodiment, however, types of the optical ranging data stored in the learning data storage unit 40, and processing performed by the data generating unit 20 and the data learning unit 50 are different from those in the second embodiment. In this embodiment, the optical ranging data itself includes distance data and intensity data, and at least one of the distance values and the intensity values are normalized so that the distance values and the intensity values are in a corresponding relation, in the same manner as in the embodiments described above.

The learning data storage unit 40 stores therein optical ranging data including reference data and disturbance data, in the same manner as in the second embodiment. In this embodiment, however, the optical ranging data stored in the learning data storage unit 40 include different attributes. The optical ranging data including different attributes is a plurality of pieces of optical ranging data having different attributes, such as the locations where the detections are made, examples of which include optical ranging data detected in a shopping district, optical ranging data detected in a residential area, and optical ranging data detected on a mountain road. For such optical ranging data, the learning data storage unit 40 can store therein label information indicating the attribute, in a manner mapped to the optical ranging data.

In this embodiment, upon receiving inputs of target data and disturbance information for the target data, the data generating unit 20 extracts label information indicating an attribute from the target data. The data generating unit 20 can then interpret the target data on the basis of the learning result of the data learning unit 50 to be described later, and generate composite data reflected with such an attribute. For example, if disturbance information of "rain" is input for a piece of target data that is reference data for "shopping district" during the daytime, the data generating unit 20 can convert the target data by reflecting a change in the reflectivity due to the materials of structures around the vehicle, e.g., concrete, being wet. As another example, if disturbance information of "rain" is input for a piece of target data that is reference data for a "mountain road" during the daytime, the data generating unit 20 can convert the target data by reflecting a change in the reflectivity due to the woods being wet.

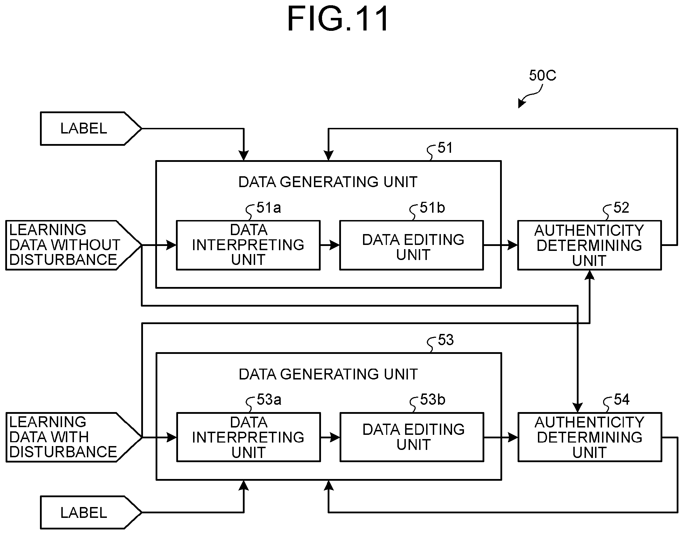

FIG. 11 is a conceptual schematic illustrating one example of the data learning unit 50 according to the third embodiment (data learning unit 50C). As illustrated in FIG. 11, the cycle generative adversarial network used by the data learning unit 50C includes the data generating units 51, 53 and the authenticity determining units 52, 54, in the same manner as in the second embodiment. In the cycle generative adversarial network according to this embodiment, however, label information is input to the data generating units 51, 53.

With such a configuration, the data generating unit 51 generates first composite data by compositing the reference data with the disturbance. For example, when an attribute "shopping district" is extracted, and disturbance "rain" is input, the data generating unit 51 generates composite data in such a manner that the disturbance of rain is reflected to the reference data of the shopping district. Furthermore, the data generating unit 53 generates second composite data with the disturbance of the rain removed from the disturbance data of rain in a shopping district. In such a case, for example, by storing the learning results correspondingly to each attribute, it becomes possible for the data generating units 51, 53 to convert the target data in a manner suitable for an attribute given thereto. The authenticity determining unit 52 then determines the authenticity of the first composite data on the basis of the authentic disturbance data, and also determines whether the attribute of "shopping district" is appropriately reflected in the first composite data. The authenticity determining unit 54 determines the authenticity of the second composite data on the basis of the authentic reference data, and also determines whether the disturbance of rain in the shopping district has been appropriately removed. In the manner described above, in this embodiment, the authenticity determining units 52, 54 determine whether an attribute is appropriately reflected, in addition to the authenticity of the composite data.

In this embodiment, the data generating units 51, 53 generate the first composite data and the second composite data in such a manner that these pieces of composite data are determined to be closer to the authentic data, and to be appropriately reflected with the attribute, by the authenticity determining units 52, 54. The authenticity determining units 52, 54 attempt to detect more differences in the generated first composite data and second composite data with respect to the authentic data, and more inappropriate points in how the attribute is reflected. By causing such two networks to compete with each other alternately and to perform learning through the competition, the data generating unit 51 becomes able to generate composite data exhibiting higher accuracy for the authenticity, and exhibiting higher accuracy for how the attribute is reflected.

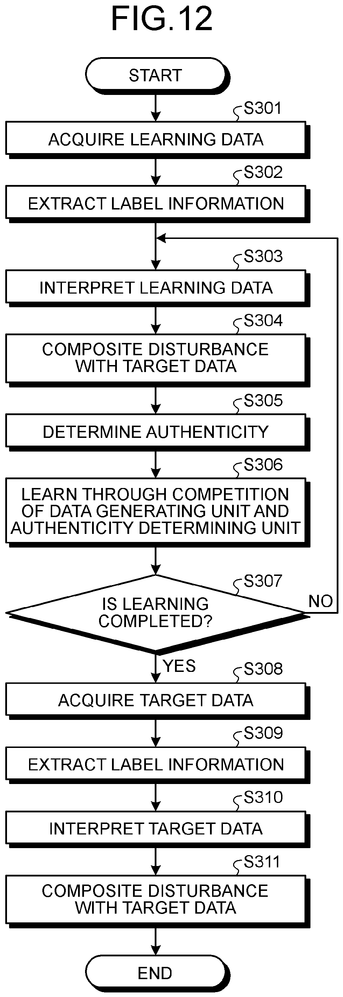

FIG. 12 is a flowchart illustrating the sequence of data generation processing. As illustrated in FIG. 12, the data learning unit 50 acquires the learning data stored in the learning data storage unit 40 (Step S301). The data learning unit 50 extracts label information indicating an attribute, the label information being included in the acquired learning data (Step S302). The data generating unit 51 causes the data interpreting unit 51a to interpret the acquired learning data (Step S303). The data editing unit 51b generates learning composite data that is the learning data with the disturbance added thereto, on the basis of the interpretation result (Step S304). The authenticity determining unit 52 determines the authenticity of the learning composite data, on the basis of the authentic disturbance data (Step S305). The data learning unit 50 performs learning through competition by causing the data generating unit 51 and the authenticity determining unit 52 to compete with each other alternately (Step S306). The data learning unit 50 then determines whether the learning has been completed (Step S307). If it is determined that the learning has completed (Yes at Step S307), the process is shifted to Step S308. If it is determined that the learning has not been completed yet (No at Step S307), the process at Step S303 and thereafter are repeated. At Step S307, the data learning unit 50 can determine that the learning has completed when the difference between the learning composite data and the authentic disturbance data becomes equal to or less than a predetermined amount, and the difference between a part of the learning composite data and a part of the disturbance data, the parts being relevant to the attribute, becomes equal to or less than a predetermined amount, that is, when the accuracy of the authenticity of the learning composite data and the accuracy of the parts relevant to the attribute become equal to or higher than a predetermined value, for example.

When the target data and the disturbance information are input, the data generating unit 20 acquires the input target data (Step S308). The data interpreting unit 21 extracts the label information indicating an attribute from the target data (Step S309), and interprets the target data (Step S310). The data editing unit 22 then generates composite data that is the target data with the disturbance added thereto, on the basis of the interpretation result (Step S311).

As described above, in the data processing algorithm evaluation device 100 according to this embodiment, the learning data storage unit 40 is configured to store therein a plurality of pieces of optical ranging data each piece of which includes a different attribute from the others, in a manner mapped with label information indicating the attribute; the data learning unit 50 is configured to perform learning using the cycle generative adversarial network so that the accuracy related to the attribute of the generated learning composite data with respect to disturbance data is improved; the data generating unit 20 is configured to extract, upon receiving inputs of the target data and the disturbance information, the label information indicating an attribute from the target data, and to interpret the target data and to generate composite data on the basis of the learning result of the data learning unit 50.

With this configuration, the data processing algorithm evaluation device 100 can perform learning to improve the accuracy of the authenticity of the learning composite data and the accuracy of how the attribute is reflected, using a cycle generative adversarial network. Therefore, it is possible to generate composite data in an aspect suitable for the attribute of the optical ranging data.

The technical scope of the present invention is not limited to the embodiments described above, and the embodiments may be modified within the scope not deviating from the essence of the present invention.

As described above, a data processing algorithm evaluation device according to a first aspect of the present disclosure includes: the data storage unit 10 configured to store therein a plurality of pieces of optical ranging data detected from a vehicle; the data generating unit 20 configured to acquire and interpret target data the target data, upon receiving an input of disturbance information representing disturbance for the target data, from the plurality of pieces of optical ranging data stored in the data storage unit 10, and to generate composite data in which the target data is reflected with the disturbance, by editing the target data on the basis of the interpretation; and the data processing unit 30 configured to evaluate performance of a data processing algorithm for determining the situation of the vehicle, on the basis of the generated composite data.

With this configuration, because the data generating unit 20 generates composite data by editing the target data in such a manner that the disturbance is reflected to the target data, on the basis of the result of an interpretation of the target data, it is possible to generate composite data closer to the actual surrounding environment, compared with a configuration in which disturbance having been generated merely with computer graphics is superimposed over the target data, for example. **In** this manner, it is possible to make appropriate performance evaluations of a data processing algorithm for determining the situation of the vehicle.

A data processing algorithm evaluation device according to a second aspect of the present disclosure is characterized in that, in the data processing algorithm evaluation device according to the first aspect, the data generating unit 20 is configured to acquire the distance of an object included in the target data, with respect to the detection position, to calculate a strength of disturbance affected by the distance, on the basis of the acquired distance, and to generate the composite data on the basis of the calculate result. Therefore, it is possible to generate composite data closer to the actual surrounding environment.

A data processing algorithm evaluation device according to a third aspect of the present disclosure is characterized in that, in the data processing algorithm evaluation device according to the first or the second aspect, the optical ranging data is acquired for each beam of measurement light emitted from the vehicle, and is a two-dimensional data arranged in the vertical direction and the horizontal direction correspondingly to the directions in which the beams are emitted. Therefore, the optical ranging data can be handled in the same manner as image data.

A data processing algorithm evaluation device according to a fourth aspect of the present disclosure is characterized in that, in the data processing algorithm evaluation device according to any one of the first to the third aspects, the optical ranging data is acquired for each beam of measurement light emitted from the vehicle, and is a two-dimensional data arranged in the vertical direction and the horizontal direction correspondingly to the directions in which the beams are emitted. Therefore, the optical ranging data can be handled in the same manner as image data.

A data processing algorithm evaluation device according to a fifth aspect of the present disclosure is characterized in that, in the data processing algorithm evaluation device according to the third or the fourth aspect, the learning data storage unit 40 is configured to store therein reference data that is the optical ranging data not including disturbance, and disturbance data that is optical ranging data including disturbance; the data learning unit 50 is configured to perform learning using a generative adversarial network or a cycle generative adversarial network on the basis of the reference data and the disturbance data; and the data generating unit 20 is configured to interpret the target data and to generate composite data on the basis of the learning result of the data learning unit 50.

With this configuration, because the data learning unit 50 perform learning with optical ranging data using a generative adversarial network or a cycle generative adversarial network, and the data generating unit 20 interprets the target data and generates composite data on the basis of the result of the learning, it is possible to generate composite data closer to the actual surrounding environment. **In** this manner, it is possible to make appropriate performance evaluations of a data processing algorithm for determining the situation of the vehicle.

A data processing algorithm evaluation device according to a six aspect of the present disclosure is characterized in that, in the data processing algorithm evaluation device according to the fifth aspect, the learning data storage unit 40 is configured to store therein a plurality of pieces of disturbance data including the same type of disturbance by different degrees; the data learning unit 50 is configured to perform learning on the basis of the plurality of pieces of disturbance data including the disturbance by different degrees; the data generating unit 20 is configured to interpret the target data, upon receiving the disturbance information including the degrees of disturbance, on the basis of the learning result of the data learning unit 50, and to generate composite data in a manner reflecting the disturbance to the target data by the degree corresponding to the disturbance information. In this manner, pieces of composite data with different degrees of disturbance can be generated appropriately, so that a broad range of performance evaluations of the data processing algorithm becomes possible.

A data processing algorithm evaluation device according to a seventh aspect of the present disclosure is characterized in that, in the data processing algorithm evaluation device according to the fifth aspect or the six aspect, the learning data storage unit 40 is configured to store therein a plurality of pieces of optical ranging data each piece of which includes a different attribute from the others, in a manner mapped with label information indicating the attribute; the data learning unit 50 is configured to perform learning using the cycle generative adversarial network so that the accuracy related to attribute of the generated learning composite data with respect to disturbance data is improved; the data generating unit 20 is configured to extract, upon receiving inputs of the target data and the disturbance information, the label information indicating an attribute from the target data, and to interpret the target data and to generate composite data on the basis of the learning result of the data learning unit 50.

With this configuration, the data processing algorithm evaluation device 100 can perform learning to improve the accuracy of the authenticity of the learning composite data and the accuracy of how the attribute is reflected, using a cycle generative adversarial network. Therefore, it is possible to generate composite data in an aspect suitable for the attribute of the optical ranging data.

A data processing algorithm evaluation device according to an eighth aspect of the present disclosure is characterized in that, in the data processing algorithm evaluation device according to any one of the fifth to the seventh aspects, the learning data storage unit 40 is configured to, when a generative adversarial network or a cycle generative adversarial network is used, use the number of beams in the vertical direction in the optical ranging data as a reference in the convolution processing. Therefore, a lack in the amount of information in the vertical direction can be suppressed.

A data processing algorithm evaluation device according to a ninth aspect of the present disclosure is characterized in that, in the data processing algorithm evaluation device according to any one of the fifth to the seventh aspects, the learning data storage unit 40 is configured, when a generative adversarial network or a cycle generative adversarial network is used, to perform skip connection processing. In this manner, the features of details lost in the convolution processing can be maintained. Therefore, it becomes possible to reproduce the details of the optical ranging data DT.

A data processing algorithm evaluation device according to a tenth aspect of the present disclosure is characterized in that, in the data processing algorithm evaluation device according to any one of the fifth to the seventh aspects, the optical ranging data DT includes distance data DT1 indicating the distance to an object, and the intensity data DT2 indicating the intensity of the measurement light reflected from the object, and at least one of the distance values and the intensity values is normalized so that the distance values and the intensity values are in a corresponding relation. In this manner, because the weights of the distance data and the intensity data can be equalized or substantially equalized, a stable learning result can be obtained from the data learning unit 50.

### Reference Signs List

10 Data storage unit
20, 51, 53 Data generating unit
21, 51a, 53a Data interpreting unit
21a, 21b Computing unit
22, 51b Data editing unit
30 Data processing unit
40 Learning data storage unit
50, 50A, 50B, 50C Data learning unit
52, 54 Authenticity determining unit
100 Data processing algorithm evaluation device
DT Optical ranging data
DT1 Distance data
DT2 Intensity data

## Claims

1. A data processing algorithm evaluation device comprising:
a data storage unit configured to store optical ranging data detected from a vehicle;
a data generating unit configured to acquire and interpret target data, upon receiving an input of disturbance information representing disturbance for the target data, from the optical ranging data stored in the data storage unit, and to generate composite data in which the target data is reflected with the disturbance by editing the target data based on the interpretation; and
a data processing unit configured to evaluate performance of a data processing algorithm for determining situation of the vehicle, based on the generated composite data.

2. The data processing algorithm evaluation device according to claim 1, wherein the data generating unit is configured to acquire a distance of an object included in the target data with respect to a detection position of the target data, to calculate a strength of disturbance having been affected by the distance based on the acquired distance, and to generate the composite data based on a result of the calculation.

3. The data processing algorithm evaluation device according to claim 1, wherein the optical ranging data is acquired for each of beams of measurement light emitted from the vehicle, and is a two-dimensional data arranged in a vertical direction and a horizontal direction correspondingly to directions in which the beams are emitted.

4. The data processing algorithm evaluation device according to claim 3, wherein the optical ranging data includes distance data indicating a distance to the object, and intensity data indicating an intensity of the measurement light reflected from the object.

5. The data processing algorithm evaluation device according to claim 3, further comprising:
a learning data storage unit configured to store reference data that is the optical ranging data not including disturbance, and disturbance data that is the optical ranging data including disturbance, as learning data; and
a data learning unit configured to generate learning composite data based on the reference data and the disturbance information, following a process identical to a process by which the data generating unit generates the composite data based on the target data and the disturbance information, and to perform learning using a generative adversarial network or a cycle generative adversarial network so that accuracy of the learning composite data with respect to the disturbance data is improved, wherein
the data generating unit is configured to interpret the target data and to generate the composite data based on a learning result of the data learning unit.

6. The data processing algorithm evaluation device according to claim 5, wherein
the learning data storage unit is configured to store a plurality of pieces of disturbance data including same type of disturbance by different degrees,
the data learning unit is configured to perform learning based on the plurality pf pieces of disturbance data including the disturbance by different degrees, and
the data generating unit is configured to interpret the target data, upon receiving the disturbance information including a degree of the disturbance, based on the learning result of the data learning unit, and to generate the composite data in a manner reflecting the disturbance to the target data by the degree corresponding to the disturbance information.

7. The data processing algorithm evaluation device according to claim 5 or 6, wherein
the learning data storage unit is configured to store therein the plurality of pieces of optical ranging data each piece of which includes a different attribute, in a manner mapped with label information indicating the attribute,
the data learning unit is configured to perform learning using the cycle generative adversarial network so that accuracy related to the attribute of the generated learning composite data with respect to the disturbance data is improved,
the data generating unit is configured to extract, upon receiving inputs of the target data and the disturbance information, label information indicating the attribute of the target data, to interpret the target data and to generate the composite data based on the learning result of the data learning unit.

8. The data processing algorithm evaluation device according to claim 5 or 6, wherein the data learning unit is configured to, when the generative adversarial network or the cycle generative adversarial network is used, use number of the beams in the vertical direction in the optical ranging data as a reference in convolution processing.

9. The data processing algorithm evaluation device according to claim 5 or 6, wherein the data learning unit is configured, when the generative adversarial network or the cycle generative adversarial network is used, to perform skip connection processing.

10. The data processing algorithm evaluation device according to claim 5 or 6, wherein the optical ranging data includes distance data indicating a distance to the object, and intensity data indicating an intensity of the measurement light reflected from the object, and at least one of a value of the distance and a value of the intensity is normalized so that the value of the distance and the value of the intensity are in a corresponding relation.
